# EUROPEAN PATENT APPLICATION

(11) **EP 4 509 296 A1**
(43) Date of publication of application: **19.02.2025**
(21) Application number: 24175343.3
(22) Date of filing: 13.05.2024
(51) Int. Cl.: B29C 70/54, B29C 70/38, G05B 19/418, G01N 21/88, G01N 25/72, B32B 38/18, B32B 5/26

(54) **MULTI-PLY LAMINATION SYSTEM**

(30) Priority: 16.08.2023 US 202318450921
(71) Applicant: The Boeing Company, Arlington, VA 22202 (US)
(72) Inventor: DONG, Shuonan, Arlington, 22202 (US); BALL, Austin B., Arlington, 22202 (US); LOCKE, Alan Scott, Arlington, 22202 (US); EINHORN, Asher Seth, Arlington, 22202 (US); JOHNSON, Brice Aaron, Arlington, 22202 (US)
(74) Representative: Bryn-Jacobsen, Caelia

(57) **Abstract**

A method forms a multi-ply laminate. A first cutting system cuts and moves a first group of courses into staging positions. Placement robots pick up and place the first group of courses from the staging positions to a layup surface to form a first ply of the multi-ply laminate, changing an orientation of fibers from an initial orientation to a desired orientation for the first ply. A second cutting system cuts and moves a second group of courses into the staging positions while the placement robots are picking up and placing the first group of courses. The placement robots pick up and place the second group of courses from the staging positions to the layup surface to form a second ply of the multi-ply laminate after the first ply has been formed, changing the orientation of the fibers from the initial orientation to the desired orientation for the second ply.

## Description

### BACKGROUND INFORMATION

### 1. Field:

The present disclosure relates generally to composite manufacturing and in particular, to multi-ply lamination of elongate composite parts.

### 2. Background:

Aircraft are being designed and manufactured with greater and greater percentages of composite materials. Composite materials are used in aircraft to decrease the weight of the aircraft. This decreased weight can improve performance features such as payload capacity and fuel efficiency. Further, composite materials provide longer service life for various components in an aircraft.

Composite materials can be tough, light-weight materials created by combining two or more functional components. For example, a composite material can include reinforcing fibers bound in a polymer resin matrix, such as a carbon fiber reinforced polymer (CFRP). The fibers can be unidirectional, such as a tape or a tow, or can be multidirectional, such as a woven cloth or fabric. The fibers and resins can be arranged and cured to form a composite structure.

Using composite materials to create aerospace composite structures can allow for portions of an aircraft to be manufactured in larger pieces or sections. For example, a fuselage in an aircraft can be created in cylindrical sections to form the fuselage of the aircraft. Other examples include, without limitation, wing components joined to form a wing or stabilizer components joined to form a stabilizer.

In manufacturing composite structures, layers of composite material can be laid up on a tool. The layers of composite material may include fibers in sheets. These sheets can take the form of, for example, without limitation, fabrics, tape, tows, or other suitable configurations for the sheets. In some cases, resin can be infused or pre-impregnated into the sheets. These types of sheets are commonly referred to as prepreg.

The different layers of prepreg can be laid up in different orientations and different numbers of layers can be used depending on the desired thickness of the composite structure being manufactured. These layers can be laid up by hand or using automated lamination equipment such as tape laminating machines or fiber placement systems.

After the different layers have been laid up on the tool, the layers can be consolidated and cured upon exposure to temperature and pressure, thus forming the final composite structure.

### SUMMARY

An example of the present disclosure provides a multi-ply lamination system that comprises a first cutting system, a second cutting system, placement robots, and a controller. The first cutting system and the second cutting system are each configured to independently cut materials having fibers oriented in an initial orientation to form courses and to move the courses into staging positions. The controller is in communication with the first cutting system, the second cutting system, and the placement robots. The controller is configured to control the first cutting system to cut and move a first group of courses into the staging positions. The controller is configured to control the placement robots to pick up and place the first group of courses from the staging positions to a layup surface to form a first ply of a multi-ply laminate, changing an orientation of the fibers from the initial orientation to a desired orientation for the first ply. The controller is configured to control the second cutting system to cut and move a second group of courses into the staging positions while the placement robots are picking up and placing the first group of courses. The controller is configured to control the placement robots to pick up and place the second group of courses from the staging positions to the layup surface to form a second ply of the multi-ply laminate, after the first ply has been formed, changing the orientation of the fibers from the initial orientation to the desired orientation for the second ply.

Another example of the present disclosure provides a multi-ply lamination system that comprises a first cutting system, second cutting system, placement robots, an automated tape layup machine, and a controller. The first cutting system and the second cutting system are each configured to independently cut materials having fibers oriented in an initial orientation to form courses and move those courses into staging positions. The automated tape layup machine is positioned to place a material having fibers in the initial orientation onto the layup surface. The controller is in communication with the first cutting system, the second cutting system, the placement robots, and the automated tape layup machine. The controller is configured to control the first cutting system to cut and move a first group of courses into the staging positions. The controller is configured to control the placement robots to pick up and place the first group of courses from the staging positions to a layup surface to form a first ply of a multi-ply laminate, changing an orientation of the fibers from the initial orientation to a desired orientation for the first ply. The controller is configured to control the second cutting system to cut and move a second group of courses into the staging positions while the placement robots are picking up and placing the first group of courses. The controller is configured to control the placement robots to pick up and place the second group of courses from the staging positions to the layup surface to form a second ply of the multi-ply laminate, after the first ply has been formed, changing the orientation of the fibers from the initial orientation to the desired orientation for the second ply. The controller is configured to control the automated tape layup machine to place the material to form a ply of the multi-ply laminate, with the ply having the fibers oriented in the initial orientation.

Yet another example of the present disclosure provides a method of forming a multi-ply laminate. A first cutting system is controlled to cut and move a first group of courses into staging positions. Placement robots are controlled to pick up and place the first group of courses from the staging positions to a layup surface to form a first ply of the multi-ply laminate, changing an orientation of fibers from an initial orientation to a desired orientation for the first ply. A second cutting system is controlled to cut and move a second group of courses into the staging positions while the placement robots are picking up and placing the first group of courses. The placement robots are controlled to pick up and place the second group of courses from the staging positions to the layup surface to form a second ply of the multi-ply laminate after the first ply has been formed, changing the orientation of the fibers from the initial orientation to the desired orientation for the second ply. An automated tape layup machine is controlled to place a material to form a third ply of the multi-ply laminate with the third ply having the fibers oriented in the initial orientation.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of a block diagram of a composite manufacturing environment in accordance with an illustrative example;
**Figure 2** is an illustration of a schematic diagram of a multi-ply layup in accordance with an illustrative example;
**Figure 3** is an illustration of a schematic diagram of an inspection system in accordance with an illustrative example;
**Figure 4** is a pictorial illustration of a multi-ply lamination system in accordance with an illustrative example;
**Figure 5** is a pictorial illustration of a layup of a course by an automated tape layup machine in a ply layup system in accordance with an illustrative example;
**Figure 6** is a pictorial illustration of a layup of courses by placement robots in a ply layup system in accordance with an illustrative example;
**Figure 7** is a pictorial illustration of a layup of courses by placement robots in a ply layup system in accordance with an illustrative example;
**Figure 8** is an illustration of a flowchart of a process for forming a multi-ply limited in accordance with an illustrative example;
**Figure 9** is an illustration of a flowchart of a process for laying up a third ply in a multi-ply laminate in accordance with an illustrative example;
**Figure 10** is an illustration of a flowchart of a process for inspecting courses in accordance with an illustrative example;
**Figure 11** is an illustration of a flowchart of a process for inspecting courses in accordance with an illustrative example;
**Figure 12** is an illustration of a flowchart of a process for inspecting courses in accordance with an illustrative example;
**Figure 13** is an illustration of a flowchart of a process for providing redundancy in a multi-ply lamination system in accordance with an illustrative example;
**Figure 14** is an illustration of a block diagram of a data processing system in accordance with an illustrative example;
**Figure 15** is an illustration of an aircraft manufacturing and service method in accordance with an illustrative example; and
**Figure 16** is an illustration of a block diagram of an aircraft in which an illustrative example may be implemented.

### DETAILED DESCRIPTION

The illustrative examples recognize and take into account one or more different considerations. For example, different illustrative examples recognize and take into account that increasing the speed at which composite parts can be fabricated is an important factor in manufacturing aircraft. Speed of forming multi-ply laminates is often a limit for high rate production of elongate composite parts that are long and narrow. The process of forming multi-ply laminates for elongate composites parts such as wing or fuselage stringers can be especially inefficient and can form a bottleneck in the aircraft manufacturing process. The inefficiencies can arise because forming a multi-ply laminate often involves laying down individual layers in which the fibers are in different orientations.

As used herein, a course is a single piece of a cut material. A ply is a series of courses having the same fiber orientation that are laid up or placed next to each other.

Also, a sequence is comprised of all of the courses and plies in a given orientation. In a sequence, all of the plies that can be laid up together before an overall inspection is performed. This sequence can include plies of multiple fiber orientations. In some examples, a sequence can be where all of plies have the same fiber orientation.

Currently, traditional tape laminating machines cut and move the lamination head many times during the layup process. Further, rework and idle time also results in delays in the manufacturing of elongate composite parts such as wing stringers. As a result, the current lamination systems are idle for large amounts of time because of inspection and rework. Undesired amounts of idle time are also present for material loading and machine maintenance.

Thus, it would be desirable to have a method, apparatus, system, and computer program product that results in at least one of reducing time needed to place nonzero courses, reducing off-line inspection and rework, or avoiding material loading and maintenance downtime. As used herein, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

In one illustrative example, a multi-ply lamination system comprises a first cutting system, a second cutting system, placement robots, and a controller. The first cutting system and the second cutting system are each configured to independently cut materials having fibers oriented in an initial orientation to form courses, and to move the courses into staging positions. The controller is in communication with the first cutting system and the second cutting system and the placement robots. The controller is configured to control the first cutting system to cut and move a first group of courses into staging positions. The controller is configured to control the placement robots to pick up and place the first group of courses from the staging positions to a layup surface to form a first ply of a multi-ply laminate, changing the orientation of the fibers from the initial orientation to a desired orientation for the first ply. The controller is configured to control the second cutting system to cut and move a second group of courses into staging positions while the placement robots are picking up and placing the first group of courses. The controller is configured to control the placement robots to pick up and place the second group of courses from the staging positions to the layup surface to form a second ply of the multi-ply laminate, after the first ply has been formed, changing the orientation of the fibers from the initial orientation to the desired orientation for the second ply.

In this example and in other examples, the reference to "a first ply" refers to the first ply that is formed from the placement of courses to form multiple plies for the multi-ply laminate. This first ply is not necessarily the very first or very last ply in the multi-ply laminate being formed through placement of courses in forming plies.

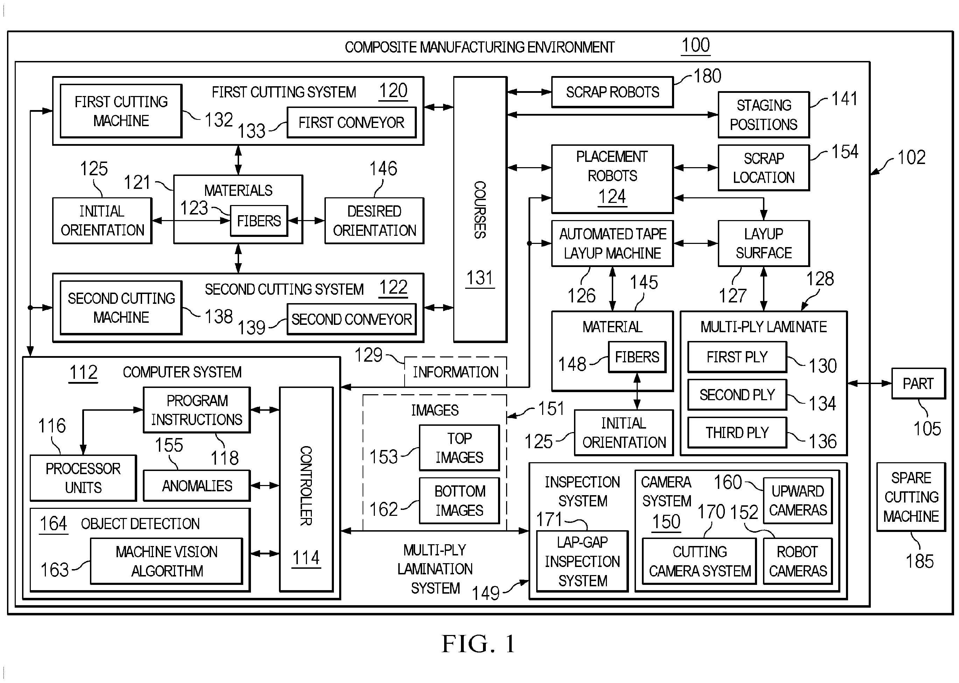

With reference now to **Figure 1****,** an illustration of a block diagram of a composite manufacturing environment is depicted in accordance with an illustrative example. As depicted, multi-ply lamination system **102** operates to create multi-ply laminate **128.** In this example, multi-ply laminate **128** is used in a charge that is used to form part **105.** Part **105** can be selected from a group comprising an elongate composite part, a wing stringer, a fuselage stringer, an empennage stringer, a floor beam, a wing spar, and an empennage spar. This part can be comprised completely of composite materials or can be a mix of composite materials with non-composite materials.

In this example, multi-ply lamination system **102** comprises a number of different components. As shown, multi-ply lamination system **102** comprises first cutting system **120,** second cutting system **122,** placement robots **124,** automated tape layup machine **126,** and controller **114.**

As depicted, first cutting system **120** comprises first cutting machine **132** and first conveyor **133.** Further in this example, second cutting system **122** comprises second cutting machine **138** and second conveyor **139.**

In this example, first cutting system **120** and second cutting system **122** are each configured to independently cut materials **121** having fibers **123** oriented in an initial orientation **125** to form courses **131** and to move courses **131** into staging positions **141.** Materials **121** can be, for example, carbon fiber fabric containing fibers **123.** The material can be in the form of a fabric, tape, or some other form. In some illustrative examples, resin can be infused within materials **121.** Further, materials **121** can be in the form of rolls.

In this example, staging positions **141** are positions from which courses **131** can be picked up by placement robots **124** and placed onto layup surface **127.** In this example, staging positions **141** are positions on first conveyor **133** and second conveyor **139.**

For example, in first cutting system **120,** first cutting machine is configured to cut courses **131** and first conveyor **133** is configured to move courses **131** cut by first cutting machine **132** to staging positions **141** on first conveyor **133** with initial orientation **125.** In second cutting system **122,** second cutting machine **138** is configured to cut courses **131** and second conveyor **139** is configured to move courses **131** cut by second cutting machine **138** to staging positions **141** on second conveyor **139** with initial orientation **125.** Further, wherein at least one of the first cutting machine **132** or second cutting machine **138** is configured to cut courses **131** from a roll of a material.

In this example, controller **114** is in communication with the first cutting system **120,** the second cutting system **122,** placement robots **124,** automated tape layup machine **126.** In this illustrative example, controller **114** can be implemented in software, hardware, firmware or a combination thereof.

When software is used, the operations performed by controller **114** can be implemented in program instructions configured to run on hardware, such as a processor unit. When firmware is used, the operations performed by controller **114** can be implemented in program instructions and data and stored in persistent memory to run on a processor unit. When hardware is employed, the hardware can include circuits that operate to perform the operations in controller **114.**

In the illustrative examples, the hardware can take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field- programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

As used herein, "a number of" when used with reference to items, means one or more items. For example, "a number of operations" is one or more operations.

Computer system **112** is a physical hardware system and includes one or more data processing systems. When more than one data processing system is present in computer system **112,** those data processing systems are in communication with each other using a communications medium. The communications medium can be a network. The data processing systems can be selected from at least one of a computer, a server computer, a tablet computer, a programmable logic (PLC) controller, or some other suitable data processing system.

As depicted, computer system **112** includes a number of processor units **116** that are capable of executing program instructions **118** implementing processes in the illustrative examples. In other words, program instructions **118** are computer readable program instructions.

As used herein, a processor unit in the number of processor units **116** is a hardware device and is comprised of hardware circuits such as those on an integrated circuit that respond to and process instructions and program code that operate a computer.

When the number of processor units **116** executes program instructions **118** for a process, the number of processor units **116** can be one or more processor units that are in the same computer or in different computers. In other words, the process can be distributed between processor units **116** on the same or different computers in computer system **112.**

Further, the number of processor units **116** can be of the same type or different type of processor units. For example, the number of processor units **116** can be selected from at least one of a single core processor, a dual-core processor, a multi-processor core, a general-purpose central processing unit (CPU), a graphics processing unit (GPU), a digital signal processor (DSP), or some other type of processor unit.

In this example, controller **114** controls first cutting system **120** to cut and move a first group of courses **131** into staging positions **141.** In this example, first group of courses **131** is cut and moved by first cutting machine **132** onto first conveyor **133.** Staging positions **141** for the first group of courses are on first conveyor **133.**

Controller **114** controls placement robots **124** to pick up and place the first group of courses **131** from staging positions **141** to layup surface **127** to form first ply **130** of multi-ply laminate **128.** In this example, placement robots **124** can be implemented using any suitable type of robot that can pick up courses **131** and place these courses onto layup surface **127.** For example, placement robots **124** can be selected from at least one of a robotic arm, a gantry robot, a mobile robotic arm, and other suitable types of robot that can pick up courses from the cutting systems and place the courses onto layup surface **127.**

In this example, layup surface **127** can be on or part of different types of objects. For example, layup surface **127** can be on a layup table. In another example, layup surface **127** can be on a layup conveyor. In yet another illustrative example, layup surface **127** can be located on a mobile or motorized cart.

As part of picking up and placing the first group of courses **131,** placement robots **124** changes an orientation of fibers **123** from initial orientation **125** to desired orientation **146** for first ply **130,** essentially, by re-orienting (i.e., rotating) the courses as they are carried from the staging positions **141** to the layup surface **127.** For example, if the courses are cut from a roll of material in the form of broad goods, the fibers in the courses may initially be in an orientation aligned with the direction of the material as rolled (sometimes referred to as a 0 degree orientation), and then rotated by the placement robots and placed so that the fibers have a desired orientation **146,** for example 45 degrees relative to the initial orientation. In this example, desired orientations for courses **131** are selected from a group consisting of 15 degrees, 30 degrees, 45 degrees, 60 degrees, 75 degrees, 90 degrees, and other orientations relative to initial orientation **125.** Being relative to the initial orientation means that these degrees can be positive or negative values. The desired orientations can be determined from a design or other information specifying orientations for courses used to form multi-ply laminate **128.**

Controller **114** also controls second cutting system **122** to cut and move a second group of courses **131** into staging positions **141** while placement robots **124** are picking up and placing the first group of courses **131.** In this example, second group of courses **131** are cut and moved by second cutting machine **138** onto second conveyor **139.** Staging positions **141** for the second group of courses **131** are on second conveyor **139.**

In this example, these cutting machines can include one or more different types of cutters. For example, these cutting machines can include ultrasonic cutters, blade cutters, rotary cutters, and other suitable types of cutters. These cutters can cut material from a source such as broad goods on a roll, or otherwise at any desired angle. In this example, the desired angle is relative to the roll direction.

Further, controller **114** controls placement robots **124** to pick up and place the second group of courses **131** from staging positions **141** to layup surface **127** to form second ply **134** of multi-ply laminate **128** after first ply **130** has been formed. In this example, the movement of the picking up and placing of the first group of courses changes the orientation of fibers **123** from initial orientation **125** to desired orientation **146** for second ply **134.** In this example, desired orientation **146** for first ply **130** can be different from desired orientation **146** for second ply **134.**

In the illustrative example, placement robots **124** are configured to change the orientation of fibers **123** in at least one of the courses by re-orienting a course as it is picked up from a staging position and placed on layup surface **127** to form a ply. The ply has a width defined by exterior edges of the ply. A course can be re-oriented so that one or more cut edges of the course forms a part of an exterior edge of the ply when placed on layup surface **127.**

Further in this example, automated tape layup (ATL) machine **126** is positioned to place a material **145** having fibers **148** in initial orientation **125** onto the layup surface **127.** In this example, controller **114** controls automated tape layup machine **126** to place material **145** on layup surface **127** to form third ply **136** of multi-ply laminate **128** with third ply **136** having fibers **148** oriented in initial orientation **125.** In some examples, automated tape layup machine **126** is configured to move along layup surface **127.** With this example, the 0 degree layer can be a continuous piece of material laid down by automated tape layup machine **126** as this machine moves along layup surface **127.**

In this illustrative example, the placement of courses and other materials onto layup surface **127** can be a placement of at least one of these courses or materials directly onto layup surface **127.** In other words, at least one of the courses or materials can be in physical contact with layup surface **127.** In the illustrative example, placement can also mean that the courses and materials are placed onto the layup surface with other courses and materials already being laid up on to layup surface **127.** **

For example, a ply can be placed onto layup surface **127** by placing the ply on top of another ply already placed on layup surface **127.** In other words, the placement of a ply or material onto layup surface **127** does not mean that the ply material is placed in direct contact with layup surface **127.**

In one non-limiting example, a first layer is at 45 degrees, a second layer is at -45 degrees, a third layer is at 90 degrees, and a fourth layer is laid down by automated tape layup machine **126** at 0 degrees. In this example, the 0 degree layer can be laid down continuously along the length of the layup by the automated tape layup machine **126** moving along or over layup surface **127.**

In this illustrative example, controller **114** is in communication with first cutting system **120,** second cutting system **122,** placement robots **124,** and automated tape layup machine **126** using information **129.** In this example, controller **114** can send information **129** such as program code, commands, data, and other information used to control the operation of these components.

Additionally, multi-ply lamination system **102** can increase the speed and accuracy at which plies are laid up through integrated inspections that are performed as part of the process of picking up and placing courses **131.** In one illustrative example, multi-ply lamination system **102** includes inspection system **149** that is configured to inspect courses **131.** Inspection system **149** can comprise at least one of a camera system, a thermal camera, an infrared light camera, a visible light camera, a laser scanner, an x-ray imaging machine, a laser shearography system, or some other suitable inspection system.

In this example, inspection system **149** comprises camera system **150.** In this example, camera system **150** is configured to generate images **151** of courses **131.** Camera system **150** can be comprised of at least one of a thermal camera, an infrared light camera, a visible light camera, or some other suitable type of camera. Inspection system **149** can use other types of devices in addition to or in place of camera system **150.** For example, inspection system **149** can include a laser scanning system, an x-ray system, a blue light sensor system, or other suitable sensor systems that can detect anomalies **155.**

In this example, camera system **150** can be used to perform inspections of courses **131** cut by first cutting system **120** and second cutting system **122** prior to these courses being placed onto layup surface **127.** This inspection can be performed to determine whether any of courses **131** have anomalies **155** that are out of tolerance.

Anomalies **155** can be at least one of foreign debris (FOD), wrinkles, pockets, imperfections, frayed edges, inconsistencies in the material, or other types of anomalies in courses **131.** In this example, the tolerance for anomalies **155** can be based on manufacturing standards, design tolerances, regulations, industry standards, government regulations, and other sources. This type of inspection can reduce rework or other issues that can occur from laying up courses with anomalies.

In one illustrative example, camera system **150** includes robot cameras **152** connected to placement robots **124.** Robot cameras **152** are positioned to generate top images **153** of a top surface of courses **131** as cut by first cutting system **120** and second cutting system **122.** These inspections can be performed with courses **131** moving to or in staging positions **141.**

A robot camera in robot cameras **152** can be connected to or in any location near an end effector of a robotic arm for placement robots or other robot. In one example, the robot camera can generate an image of the top surface of a course prior to picking up the course for placement.

In this example, controller **114** controls the generation of top images **153** of top surface of courses **131** in response to placement robots **124** moving to pick up courses **131.** Controller **114** receives top images **153** and analyzes top images **153** for anomalies **155** that are out of tolerance. Controller **114** controls operation of placement robots **124** to move any of courses **131** having anomalies that are out of tolerance to scrap location 154.

Additionally, camera system **150** can include upward cameras **160** connected to camera stations. Camera stations can be any structure which upward cameras **160** can be connected to and positioned to generate bottom images **162.** In this example, upward cameras **160** are positioned to generate bottom images **162** of a bottom surface of courses **131** held by placement robots **124.**

With upward cameras **160,** controller **114** controls the generation of bottom images **162** of the bottom surface of courses **131.** In one illustrative example, bottom images **162** can be generated by upward cameras **160** in response to placement robots **124** moving courses **131** to upward cameras **160.**

In this example, controller **114** analyzes bottom images **162** for anomalies **155** that are out of tolerance. Controller **114** controls placement robots **124** to move any courses **131** having anomalies **155** that are out of tolerance to scrap location **154.**

In yet another example, camera system **150** can include cutting camera system **170.** With this example, cutting camera system **170** is positioned to generate top images **153** of a top surface of courses **131** in response to first cutting system **120** and second cutting system **122** cutting courses **131.**

With this example, controller **114** generates top images **153** of courses **131** using cutting camera system **170** in response to first cutting system **120** and second cutting system **122** cutting courses **131.** Controller **114** analyzes top images **153** received from cutting camera system **170** for anomalies **155** that are out of tolerance. Controller **114** moves any courses **131** that have anomalies **155** that are out of tolerance to scrap location **154.**

In this example, the movement of courses **131** from the cutting systems to scrap location **154** can be performed using robots other than placement robots **124** to increase the speed and efficiency at which multi-ply laminate **128** can be formed. In other examples, the conveyor can move courses **131** having anomalies **155** that are out of tolerance to scrap bin located at the end of the conveyor. In this case, those courses are not picked up by placement robots **124** for use in forming multi-ply laminate **128.**

For example, multi-ply lamination system **102** can include a number of scrap robots **180** positioned to remove courses **131** cut by first cutting system **120** and second cutting system **122** with anomalies **155** that are out of tolerance to scrap location **154.** Scrap robots **180** can be, for example, a robotic arm, a delta arm, a drone, or some other suitable type of robot. In yet other illustrative examples, cutting camera system **170** can also include cameras positioned to generate bottom images **162** of courses **131** cut by one of the cutting systems. This inspection can be performed prior to inspections using images **151** generated by robot cameras **152.**

In this illustrative example, images **151** are analyzed by controller **114.** The analysis can be performed using object detection **164** such as machine vision algorithm **163.** This type of algorithm can perform image preprocessing, feature extraction, object detection, segmentation, classification, and recognition. The process implemented by machine vision algorithm **163** can identify specific objects or patterns or characteristics in images **151** that can be anomalies **155.**

In another illustrative example, the inspection system **149** can include lap-gap inspection system **171** that is used after all courses in a ply are placed onto the layup surface **127.** Lap-gap inspection system **171** can be used to measure gaps between courses **131.** Lap-gap inspection system **171** can be connected to or in any location near an end effector of a robotic arm for placement robots or other robot. In this example, lap-gap inspection system **171** can comprise at least one of a laser profilometer, a camera, a thermal camera, an infrared light camera, a visible light camera, a laser scanner, an x-ray imaging machine, a laser shearography system, or some other suitable inspection system.

In this example, every other course in courses **131** is placed by placement robots **124** onto the layup surface **127** simultaneously, followed by the remaining courses **131,** after which the robot uses its lap-gap inspection system to measure the gaps between courses.

In the illustrative example, a profilometer can be used to the gap width between adjacent courses. This tool can also be used to inspect the location of the overall ply boundary. This inspection can be for both interior boundary edges and boundary edges outside of the net trim line.

For example, placement robots **124** place all of the courses for the plies of a sequence. Placement robots **124** scan the nominal between-course gaps for all of courses using a profilometer and recording gap measurement data generated by the profilometer along the gap length. Further, the placement robots **124** scan the entire nominal border of all plies of the sequence with the profilometer. In this example, a single edge is detected with the profilometer and, in conjunction with robot tool center point (TCP) location data, the ply boundary location data can be determined.

With this example, if gap and boundary location measurements are within tolerance, layup continues with the next sequence. Otherwise, intervention can be performed to correct the tolerance error. The intervention can include course removal and restarting or replacing a course.

In yet another illustrative example, the efficiencies of forming multi-ply laminate **128** can be achieved using backup components. For example, multi-ply lamination system **102** can include spare cutting machine **185** that is used in response to one of first cutting machine **132** and the second cutting machine **138** needing maintenance. For example, the maintenance may be replacing a roll of material used to cut courses, replacing a blade, scheduled maintenance, or other maintenance operations.

Spare cutting machine **185** can be used in place of one of the cutting machines. The process can be a hot swap process in which starting and reinitializing the cutting process is not needed. In other words, spare cutting machine **185** can pick up where the prior cutting machine left off. In one example, controller **114** synchronizes operation of spare cutting machine **185** to cut courses **131** in response to swapping spare cutting machine **185** with a cutting machine in one of first cutting system **120** and second cutting system **122.**

Further in the illustrative examples, when spare cutting machine **185** is hot swappable, interruptions in cutting and placing courses can be minimized. This hot swapping can be implemented using features or components that enable immediate mechanical alignment to the conveyor. For example, mechanisms for rapid connection of electrical and communication cables and automatic controller integration in the cutting systems can be used.

Thus, in one illustrative example, one or more solutions are present that overcome a problem with undesired times for laying up courses in manufacturing composite parts. As a result, one or more technical solutions can provide increased speed in laying out courses through using placement robots to simultaneously layup courses for a ply.

One or more illustrative examples enable increased efficiency in placing courses to form a ply with increased efficiency and speed as compared to current techniques used to lay up courses for composite parts such as those that may be long and narrow. The illustrative examples avoid moving a lamination head many times during a layout process as with current techniques. Further, manual inspections may be reduced or avoided through the use of cameras to generate images to analyze courses for anomalies that are out of tolerance.

In the illustrative examples, courses can be cut simultaneously while other (already-cut) courses are being placed by placement robots. Multiple cutting machines are present such that each cutting machine can cut courses for a particular orientation, and/or be synchronized with each other and/or the operations of the placement robots. The courses cut by each of the cutting machines have orientations based on the sequence of courses in a design for the composite part. As a result, once placement robots have completed placing courses in one orientation, for example to complete a ply of a multi-ply laminate, those placement robots can begin placing courses for the next orientation, for example to assemble the next ply of the multi-ply laminate, without waiting or delays.

In the illustrative examples, simultaneous placement of multiple courses can be performed using placement robots. Further, swapping of the equipment can be formed to reduce downtime when at least one of material loading or other maintenance is needed. In the illustrative examples, a charge lamination process can be reduced from 12 hours to one hour for wing stringers.

Further, inspections can be performed as courses are picked up for placement. These inspections are automatically performed and can reduce or avoid the need for manual inspections of the courses used to assemble the plies.

The illustration of composite manufacturing environment **100** in **Figure 1** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, automated tape layup machine **126** can be an optional component and may be omitted from multi-ply lamination system **102** in some examples. As another example, one or more cutting systems in addition to first cutting system **120** and second cutting system **122** can be present for cutting courses **131.** Further, placement robots **124** can be of the same type of robots or can be of different types of robots in the different illustrative examples. For example, a portion of placement robots **124** can be robotic arms in fixed locations while another portion of placement robots **124** can be mobile robotic arms that can move to different locations.

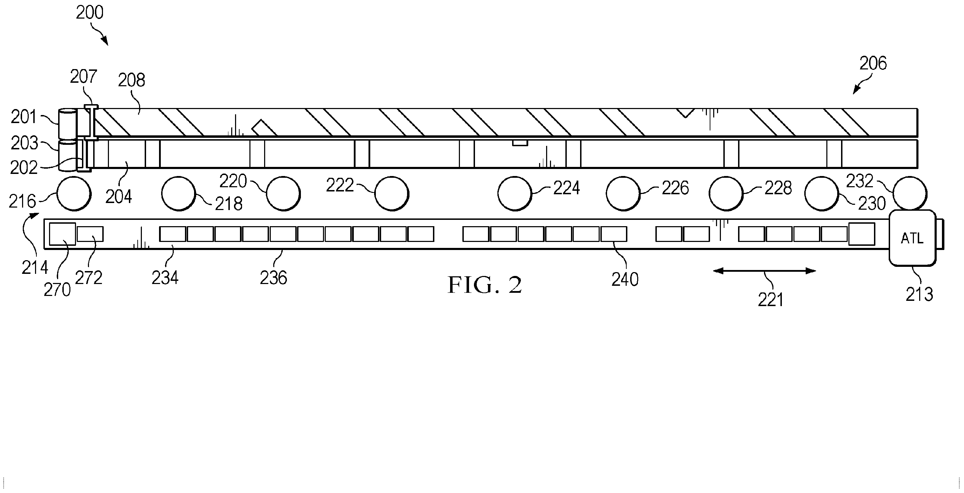

With reference next to **Figure 2** an illustration of a schematic diagram of a multi-ply layup is depicted in accordance with an illustrative example. Multi-ply lamination system **200** is an example of one implementation for multi-ply lamination system **102** in **Figure 1****.**

As depicted, multi-ply lamination system **200** has first cutting machine **202** that cuts material **203** to form courses **206** on first conveyor **204** that have an initial orientation. In this example, the material is in the form of broad goods on a roll, and the initial orientation is 0 degrees, with fibers in the direction shown by arrow **221.** In other words, the fibers in the material are oriented in the direction that the material is rolled on the roll. These courses can be cut by first cutting machine **202** to have different sizes and shapes but have the same initial orientation.

Multi-ply lamination system **200** also has second cutting machine **207** that cuts material **201,** also shown in this example to be in the form of broad goods on a roll, to form courses **206** on second conveyor **208,** and also having the initial orientation. These courses can also have different sizes and shapes with the initial orientation. As depicted, first conveyor **204** and second conveyor **208** are parallel to each other.

In this example, multi-ply lamination system **200** also includes placement robots **214.** As depicted, nine placement robots are present, placement robot **216,** placement robot **218,** placement robot **220,** placement robot **222,** placement robot **224,** placement robot **226,** placement robot **228,** placement robot **230,** and placement robot **232.**

The location of first conveyor **204,** second conveyor **208,** and placement robots **214** are such that placement robots **214** can pick up courses **206** and place them onto layup surface **234** on conveyor **236.** Also, the type and configuration of placement robots **214** are selected to be able to pick up courses **206** from first conveyor **204** and second conveyor **208** and place those courses onto layup surface **234** on conveyor **236** as part of forming plies such as ply **240.** The location of first conveyor **204,** second conveyor **208,** and placement robots **214** are such that placement robots **214** can pick up courses **206** and place them onto layup surface **234** on conveyor **236.**

In this example, multi-ply lamination system **200** also includes automated tape layup machine **213.** This automated tape layup machine cuts courses having the initial orientation, which is 0 degrees in this example.

During operation of multi-ply lamination system **200,** first cutting machine **202** cuts courses **206** that form an array of courses **206** on first conveyor **204.** These courses are moved by first conveyor **204** into staging positions on first conveyor **204** relative to placement robots **214.** When courses **206** have been cut and moved into staging positions on first conveyor **204,** placement robots **214** pick up courses **206** from first conveyor **204** and place those courses onto layup surface **234** on conveyor **236.**

As courses **206** are being picked up from first conveyor **204** and placed onto layup surface **234** by placement robots **214,** second cutting machine **207** cuts courses **206** that move on second conveyor **208** to staging positions on second conveyor **208** relative to placement robots **214.** The timing of cutting courses **206** by these cutting machines can be selected such that placement robots **214** always have courses **206** in staging positions that are ready for placement onto layup surface **234.**

Once placement robots **214** have completed picking up and placing courses **206** from staging positions on first conveyor **204,** placement robots **214** begin picking up courses **206** from staging positions on second conveyor **208** and placing courses **206** from those staging positions onto layup surface **234.** In some examples, some of placement robots **214** can begin picking up and placing courses **206** from second conveyor **208** prior to other ones of placement robots **214** completing picking up and placing the first group of courses **206.**

In this example, first cutting machine **202** begins cutting new courses once the first group of courses **206** has been picked up and placed onto layup surface **234.** These new courses can be placed on layup surface **234** with same or different orientation from the orientation for courses **206** picked up from staging positions on second conveyor **208** and placed on layup surface **234.** The orientations are selected based on design of the composite part that identifies orientations for courses that are placed to form plies for the composite part.

This process can repeat with courses being cut on alternate cutting machines and being placed by placement robots **214** onto layup surface **234.** This placement can result in a multi-ply layup. This alternating cutting, picking up, and placing courses with desired orientations can increase the efficiency and speed at which plies and multi-layer plies can be laid up for a composite part. For example, a first layer can be laid up at 45 degrees, a second layer at -45 degrees, and a third layer is at 90 degrees. In this example, a fourth layer is laid down by automated tape layup machine **126** at 0 degrees. In this example, the 0 degree layer can be laid down continuously along the length of the layup by the automated tape layup machine **213** moving along or over layup surface **234.**

In this example, when courses having a desired orientation that is the same as the initial orientation, such as 0 degrees, these courses can be placed on layup surface **234** using automated tape layup machine **213.** Automated tape layup machine **213** can move in the direction of arrow **221** along conveyor **236.** Automated tape layup machine **213** can provide increased performance and efficiency in laying up courses having an orientation of 0 degrees as compared to using placement robots **214** to layup courses with an orientation of 0 degrees.

In this depicted example, some courses can have wider width than other courses that optimize for tab outs. For example, course **270** is wider than course **272.**

Illustration of multi-ply lamination system **200** is shown to illustrate one manner in which multi-ply lamination system **102** in **Figure 1** can be implemented. This illustration is not meant to limit the manner in which multi-ply lamination system **102** can be implemented. For example, automated tape layup machine **213** is an optional component and can be omitted in some implementations. When automated tape layup machine **213** is not present, the orientations for courses **206** can also include desired orientations that are the same as the initial orientations.

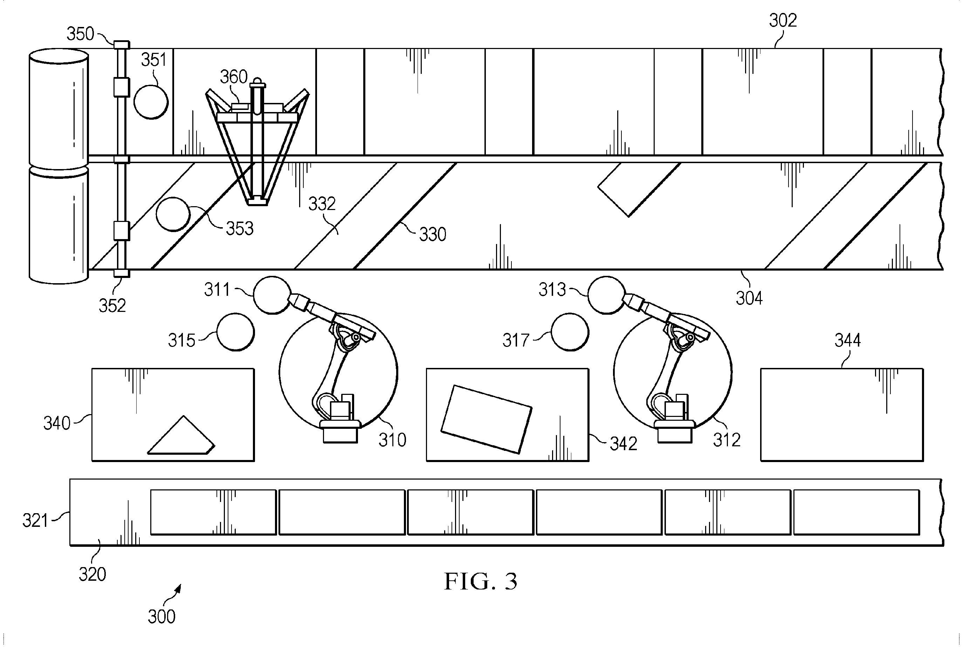

With reference next for **Figure 3****,** an illustration of a schematic diagram of an inspection system is depicted in accordance with an illustrative example. In this example, inspection system **300** is an example of an implementation for inspection system **149** in **Figure 1****.** As depicted, inspection system **300** is comprised of cameras that are used at different steps in the process of cutting material to form courses and placing the courses to form a ply.

As depicted in this example, inspection system **300** comprises cameras that are positioned to generate images of courses for analysis during different times from cutting course to placing courses on a layup surface.

In this illustrative example, placement robot **310** has robotic camera **311** and placement robot **312** has robotic camera **313.** These robotic cameras are connected to placement robots. When one component is "connected" to another component, the connection is a physical connection. For example, a first component, robotic camera **311,** can be considered to be physically connected to a second component, placement robot **310,** by at least one of being secured to the second component, bonded to the second component, mounted to the second component, welded to the second component, fastened to the second component, or connected to the second component in some other suitable manner. The first component also can be connected to the second component using a third component. The first component can also be considered to be physically connected to the second component by being formed as part of the second component, an extension of the second component, or both.

These robotic cameras can be used to generate images of the top surfaces of courses prior to or as part of the placement robots picking up courses for placement from either first conveyor **302** or second conveyor **304.** The top surfaces of these images can be analyzed for anomalies that are out of tolerance on the top surfaces of the courses.

Additionally, inspection system **300** also includes upward cameras such as upward camera **315** and upward camera **317.** Upward camera **315** is positioned to be within reach of placement robot **310.** Upward camera **317** is positioned to be within reach of placement robot **312.** In this illustrative example, these upward cameras are used to generate images of the bottom surfaces of courses that are picked up and held by the placement robots. These images can be analyzed to determine whether anomalies that are out of tolerance are present on the bottom surfaces of the courses.

For example, placement robot **310** can move to pick up course **330.** This movement of placement robot **310** results in robotic camera **311** being positioned over course **330.** Robotic camera **311** can generate an image of the top surface **332** of course **330.** This image can be analyzed to determine whether one or more anomalies are present on the top surface **332** of course **330** that are out of tolerance.

If an anomaly is present on top surface **332** of course **330** that is out of tolerance, placement robot **310** picks up and places course **330** in scrap bin **340.** If an anomaly that is out of tolerance is not present on top surface **332,** placement robot **310** picks up course **330.** Placement robot **310** moves course **330** into a position over upward camera **315.** Upward camera **315** generates an image of the bottom surface (not shown) of course **330.** This image is analyzed to determine whether an anomaly that is out of tolerance is present on the bottom surface of course **330.** If an anomaly is present that is out of tolerance, course **330** is placed in scrap bin **340.** If an anomaly that is out of tolerance is not present on the surface of course **330,** placement robot **310** moves and places course **330** onto layup surface **320** of conveyor **321.**

Placement robot **312** can generate images of top surfaces of courses using robotic camera **313** and images of bottom surfaces of courses using upward camera **317** for analysis to determine whether anomalies are present that are out of tolerance. In this example, placement robot **312** places courses with anomalies that are out of tolerance in scrap bin **342.** In this example, scrap bin 344 can be used by placement robot **312** or another robot.

Additionally, inspections of courses can be performed prior to placement robots moving to pick up courses. For example, cutting machine **350** has cutting system camera **351** and cutting machine **352** has cutting system camera **353.** In this example, cutting system camera **351** is connected to cutting machine **350,** and cutting system camera **353** is connected to cutting machine **352.**

These cutting system cameras can moved as the cutting machines move or can move independently of the cutting machines to generate images of the top surfaces of courses cut by the cutting machines. These images can be analyzed for anomalies. In this example, anomalies can also include the shape and dimensions of the courses in addition to anomalies that may be present on the surface of the courses. If an anomaly is present, scrap robot **360** picks up the course with anomalies and deposits that course into one of scrap bin **340,** scrap bin **342,** scrap bin **344,** or any other scrap bin.

This analysis can be formed as the course is being cut or after the course has been cut. If an issue is identified with respect to the dimensions and the course as it is being cut, the cutter can cut the material to form an unfinished course that can be discarded. In this manner, reduced waste of materials such as fabrics or tape can occur. Further, inspecting courses prior to laying up the courses on a layup surface to form a ply can reduce the time and issues involved with finding inconsistencies later in processing the ply.

In another example, scrap robot **360** can be omitted. This example, one of placement robot **310** and placement robot **312** can be used in place of scrap robot **360.** In another example, courses with anomalies that are out of tolerance remain on first conveyor **302** and second conveyor **304,** and are moved to directly fall into a large scrap bin at the far end of the conveyors (not shown).

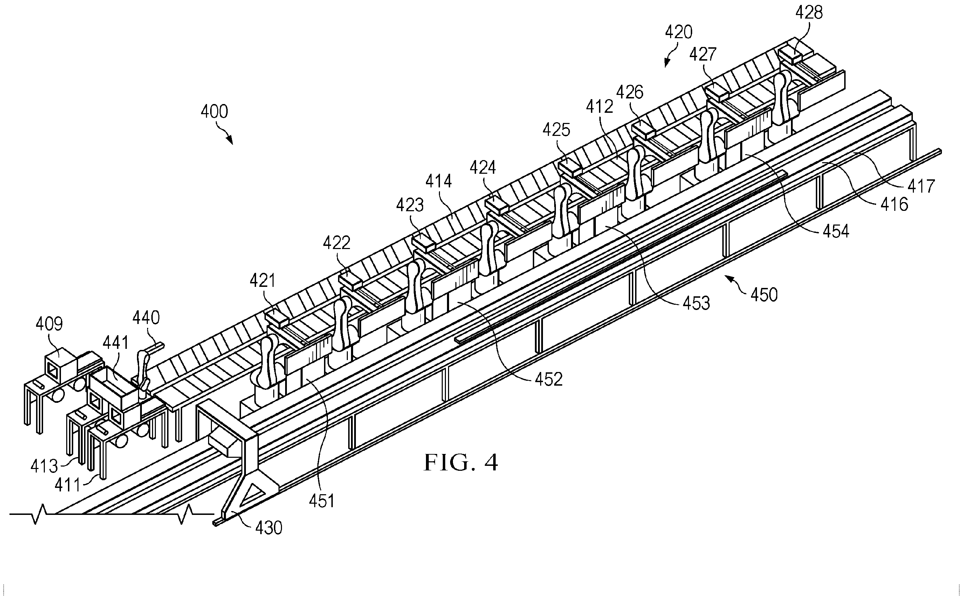

With reference next to **Figure 4****,** a pictorial illustration of a multi-ply lamination system is depicted in accordance with an illustrative example. Multi-ply lamination system **400** is an example of one implementation for multi-ply lamination system **102** shown in block form in **Figure 1****.**

Multi-ply lamination system **400** comprises first cutting machine **411** with first conveyor **412.** Additionally, second cutting machine **413** and second conveyor **414** are positioned parallel to first cutting machine **411** and first conveyor **412.**

In this example, placement robots **420** include placement robot **421,** placement robot **422,** placement robot **423,** placement robot **424,** placement robot **425,** placement robot **426,** placement robot **427,** and placement robot **428.** In this example, placement robots **420** are robotic arms that can pick up courses in staging positions on both first conveyor **412** and second conveyor **414** and place those courses onto layup surface **416** on ply conveyor **417.** Additionally, automated tape layup (ATL) machine **430** is positioned to move and lay up courses on layup surface **416.**

Further, scrap robot **440** is located by first cutting machine **411** and second cutting machine **413.** This scrap robot can place courses that have been cut incorrectly or have other types of anomalies into scrap bin **441.**

Further in this example, scrap bins **450** are present for use by placement robots **420.** Scrap bins **450** includes scrap bin **451,** scrap bin **452,** scrap bin **453,** and scrap bin **454.** Placement robots **420** can include cameras used to inspect courses that placement robots **420** moved to pick up. Courses with anomalies that are out of tolerance can be placed into scrap bins **450** by placement robots **420.**

Further in this example, spare cutting machine **409** can be hot swapped with first cutting machine **411** or second cutting machine **413.** This hot swapping can be performed to allow continuous cutting and positioning of courses as needed to provide placement robots **420** with a continuous supply of courses to form plies on layup surface **416.**

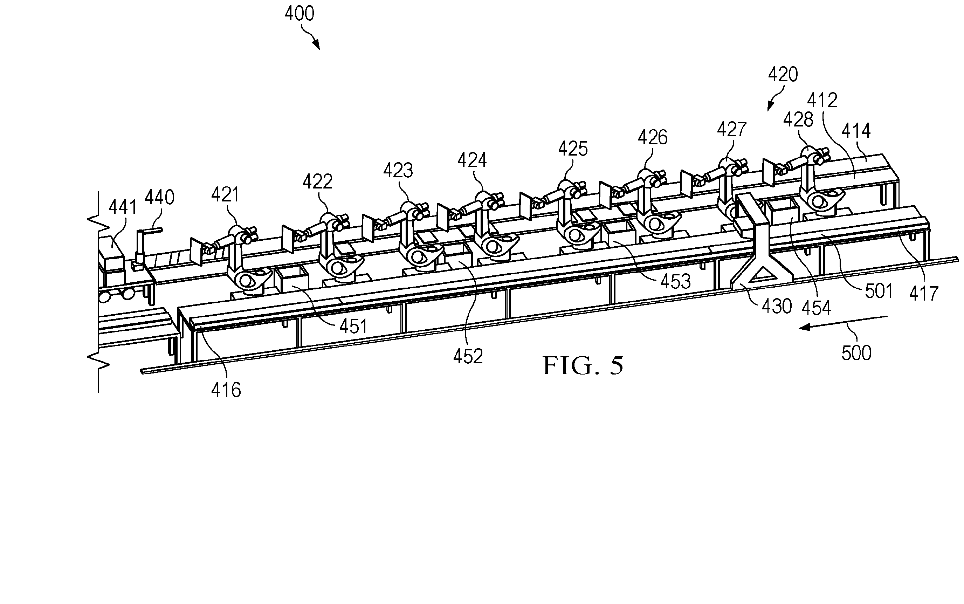

**Figures 5-7** are pictorial illustrations of a process for laying up courses in accordance with an illustrative example illustrate. With reference to **Figure 5****,** a pictorial illustration of a layup of a course by an automated tape layup machine in a ply layup system is depicted in accordance with an illustrative example. As depicted, automated tape layup machine **430** moves in the direction of arrow **500** to lay up 0 degree course **501** on layup surface **416.**

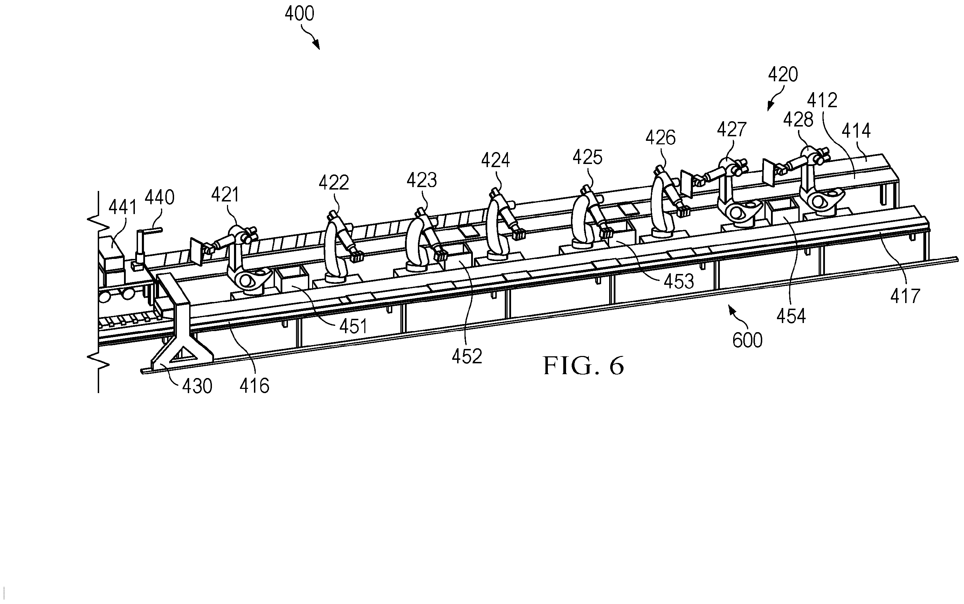

In **Figure 6****,** a pictorial illustration of a layup of courses by placement robots in a ply layup system is depicted in accordance with an illustrative example. As depicted in this figure, placement robots **420** have picked up courses from first conveyor **412** and placed the courses onto layup surface **416** in staggered arrangement **600** with gaps. As illustrated, a gap is present at every other location.

In this figure, second cutting machine **413** is cutting courses that are moved by second conveyor **414** to staging positions on second conveyor **414** while placement robots **420** pickup courses from staging positions on first conveyor **412** for placement.

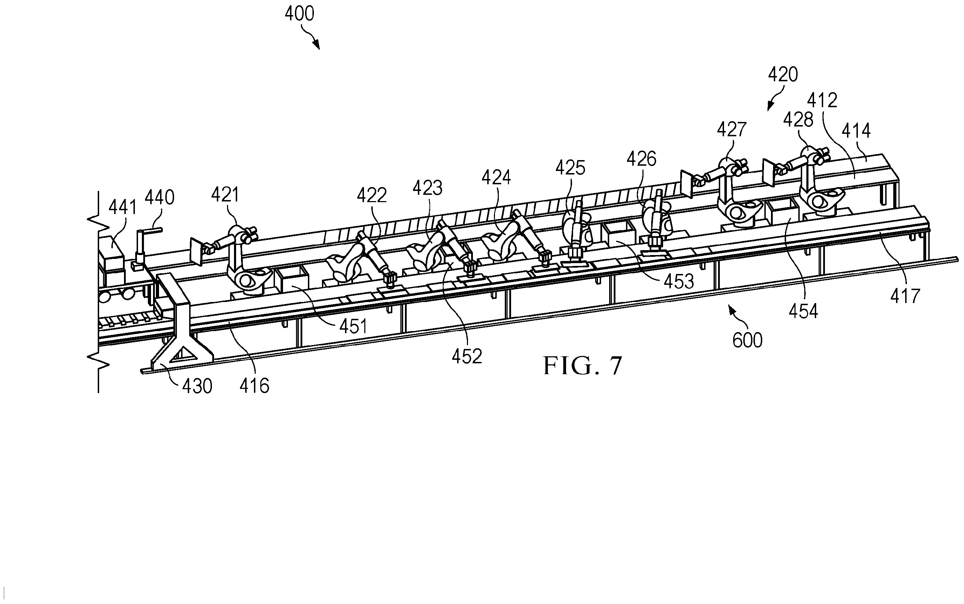

Turning next to **Figure 7****,** a pictorial illustration of a layup of courses by placement robots in a ply layup system is depicted in accordance with an illustrative example. In this figure, placement robots **420** have picked up and placed courses from first conveyor **412** into the gaps in staggered arrangement **600** of the courses on layup surface **416.**

In this illustrative example, placing the missing in-between courses can be performed when the robot vacuum chuck end effector is larger than the placed length of the course. Otherwise, If the robots attempted to simultaneously place directly adjacent courses, the end effectors of the placement robots can potentially collide.

At this point, placement robots **420** can utilize their onboard lap-gap inspection system to measure gaps between adjacent courses. For example, placement robots **420** can include measurement devices such as profilometers that can be used to perform gap assessment to ensure that adjacent courses are close enough to each other.

As depicted in this example, second cutting machine **413** has finished cutting courses that are now in staging positions on second conveyor **414.** These courses are ready for placement robots **420** to pick up and place onto layup surface **416.**

This cycle of course cutting and placement onto layup surface **416** can be performed until a multi-layer ply has been completed for a composite part. This process for laying up courses reduces idle time of placement robots **420** because placement robots **420** do not need to wait for new courses to become available for placement. Instead, placement robots **420** can continue to place courses that are picked up from positions on first conveyor **412** and second conveyor **414.**

Further, inspections of courses can be performed prior to and after placement robots **420** pick up the course. Courses with anomalies outside of the tolerance can be discarded and new courses can be recut and placed in the positions for pickup and placement by placement robots **420.**

The illustration of multi-ply lamination system **400** in **Figures 4-7** is meant as one example for multi-ply lamination system **102** in **Figure 1****.** This illustration is not meant to limit the manner in which other illustrative examples can be implemented. For example, other numbers of placement robots can be used other than the eight placement robots depicted in this example. For example, four placement robots, 20 placement robots, or some other number placement robots can be used. Further, one or more cutting machines and conveyors can be used in addition to first cutting machine **411** with first conveyor **412** and second cutting machine **413** and second conveyor **414.** These cutting machines and conveyors may be placed such that placement robots **420** can reach the courses cut by these conditions.

In another illustrative example, another set of placement robots, cutting machines, and conveyors can be positioned with a mirrored configuration on the opposite side of the layup surface **416** and conveyor **417.** With this configuration, all of the placement robots can place courses onto the layup surface **416,** coordinated by the controller **114.**

In yet other illustrative examples, an inspection system may be omitted. Or inspections may be performed by placement robots **420** and not by the cutting machines. In yet other illustrative examples, one or more layup surfaces on conveyors may be present in addition to layup surface **416** on conveyor **417.** With additional layup surfaces, placement robots **420** can place courses for multiple composite parts. Further, in other illustrative examples courses do not need to be placed in staggered positions onto layup surface **416.**

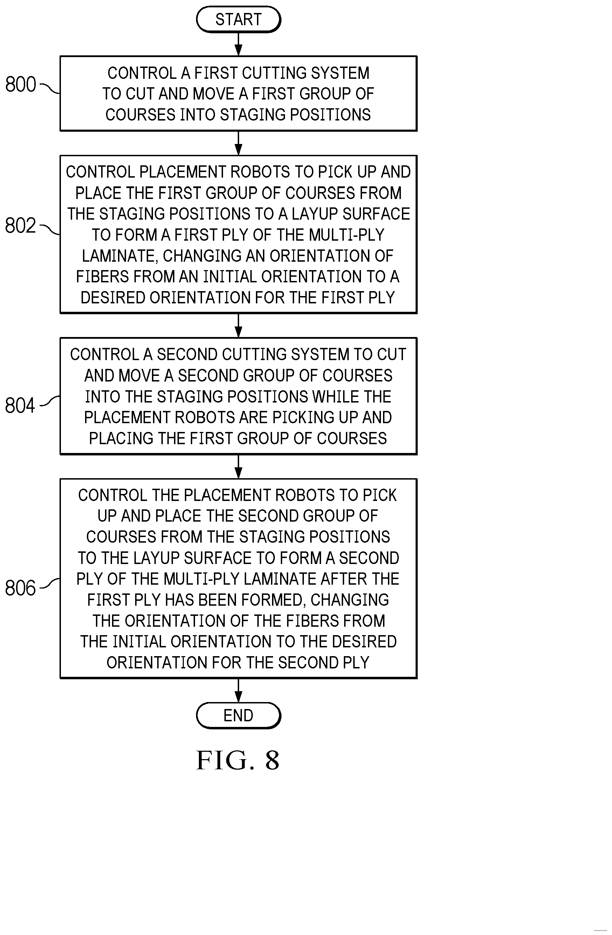

Turning next to **Figure 8****,** an illustration of a flowchart of a process for forming a multi-ply limited is depicted in accordance with an illustrative example. The process in **Figure 8** can be implemented in hardware, software, or both. When implemented in software, the process can take the form of program instructions that are run by one of more processor units located in one or more hardware devices in one or more computer systems. For example, the process can be implemented in controller 114 in computer system **112** in **Figure 1****.**

The process controls a first cutting system to cut and move a first group of courses into staging positions (operation **800**). The process controls placement robots to pick up and place the first group of courses from the staging positions to a layup surface to form a first ply of the multi-ply laminate, changing an orientation of fibers from an initial orientation to a desired orientation for the first ply (operation **802**).

The process controls a second cutting system to cut and move a second group of courses into the staging positions while the placement robots are picking up and placing the first group of courses (operation **804**). The process controls the placement robots to pick up and place the second group of courses from the staging positions to the layup surface to form a second ply of the multi-ply laminate after the first ply has been formed, changing the orientation of the fibers from the initial orientation to the desired orientation for the second ply (operation **806**). The process terminates thereafter.

In the example in the process in **Figure 8****,** each subsequent ply for the multi-ply laminate is formed by placing at least some of material of each subsequent ply to at least partially overlap a prior ply in the multi-ply laminate. Further, the orientation of the fibers in at least one of the courses is changed by re-orienting the course as it is picked up from a staging position and placed on the layup surface to form a ply. Also, the ply has a width defined by exterior edges of the ply. The course is re-oriented so that one or more cut edges of the course forms a part of an exterior edge of the ply when placed on the layup surface.

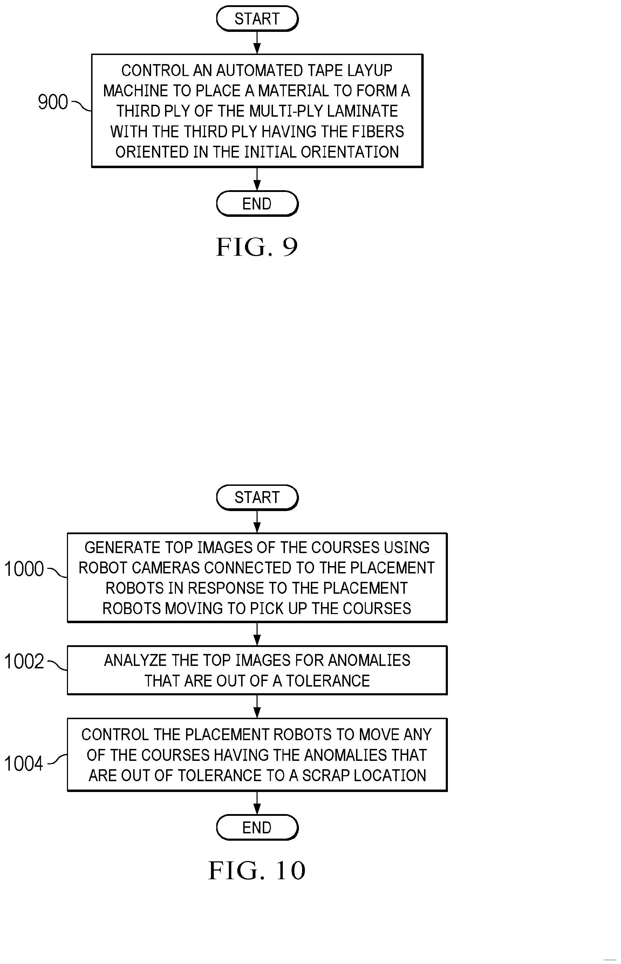

Turning next to **Figure 9****,** an illustration of a flowchart of a process for laying up a third ply in a multi-ply laminate is depicted in accordance with an illustrative example. The process illustrated in this figure is an example of an additional operation that can be performed with the operations in **Figure 8****.**

The process controls an automated tape layup machine to place a material to form a third ply of the multi-ply laminate with the third ply having the fibers oriented in the initial orientation (operation **900**). The process terminates thereafter.

With reference now to **Figure 10****,** an illustration of a flowchart of a process for inspecting courses is depicted in accordance with an illustrative example. The process in this figure is an example of an additional operation that can be performed with the operations in **Figure 8****.**

The process generates top images of a top surface of the courses using robot cameras connected to the placement robots in response to the placement robots moving to pick up the courses (operation **1000**). The process analyzes the top images for anomalies that are out of a tolerance (operation **1002**).

The process controls the placement robots to move any of the courses having the anomalies that are out of the tolerance to scrap location (operation **1004**). The process terminates thereafter.

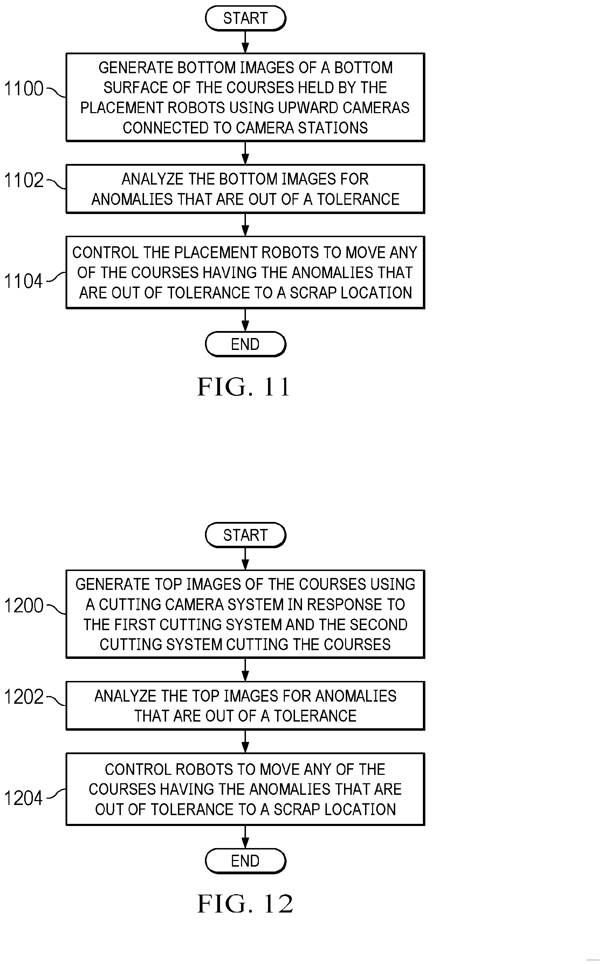

Next in **Figure 11****,** an illustration of a flowchart of a process for inspecting courses is depicted in accordance with an illustrative example. The process in this figure is an example of an additional operation that can be performed with the operations in **Figure 8****.**

The process generates bottom images of a bottom surface of the courses held by the placement robots using upward cameras connected to camera stations (operation **1100**). The process analyzes the bottom images for anomalies that are out of a tolerance (operation **1102**).

The process controls the placement robots to move any of the courses having the anomalies that are out of tolerance to a scrap location (operation **1104**). The process terminates thereafter.

Turning to **Figure 12****,** an illustration of a flowchart of a process for inspecting courses is depicted in accordance with an illustrative example. The process depicted in this flowchart is an example of additional operations that can be performed with the operations in **Figure 8****.**

The process generates top images of the courses using a cutting camera system in response to the first cutting system and the second cutting system cutting the courses (operation **1200**). The process analyzes the top images for anomalies that are out of a tolerance (operation **1202).**

The process controls robots to move any of the courses having the anomalies that are out of tolerance to a scrap location (operation **1204**). The process terminates thereafter. In operation **1204,** the robots that move the courses with anomalies to its replication can take a number of different forms. For example, these robots can be placement robots. In other illustrative examples, scrap robots are configured to remove courses with anomalies. These scrap robots are separate robots from the placement robots. Scrap robots can be, for example, a robotic arm, a delta arm, a drone, or some other suitable robot.

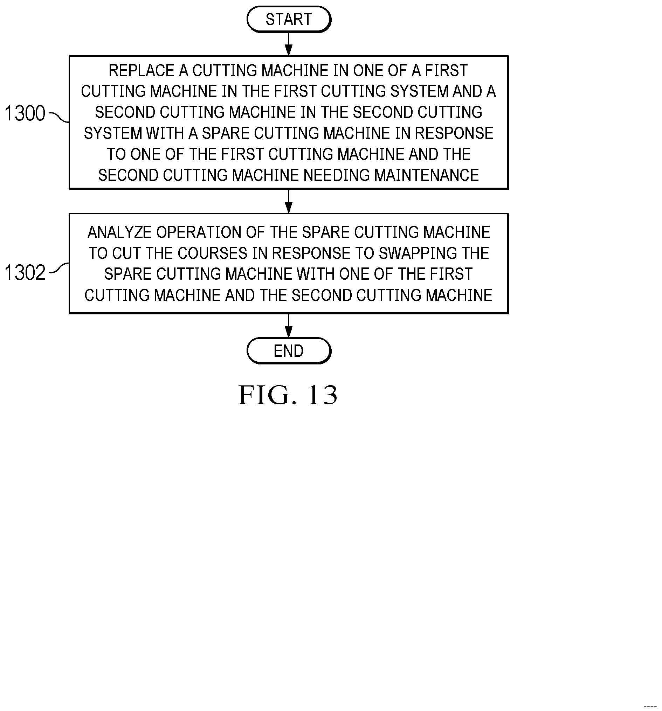

With reference to **Figure 13****,** an illustration of a flowchart of a process for providing redundancy in a multi-ply lamination system is depicted in accordance with an illustrative example. The process depicted in this flowchart is an example of additional operations that can be performed with the operations in **Figure 8****.**

The process replaces a cutting machine in one of a first cutting machine in the first cutting system and a second cutting machine in the second cutting system with a spare cutting machine in response to one of the first cutting machine and the second cutting machine needing maintenance (operation **1300**). The process analyzes operation of the spare cutting machine to cut the courses in response to swapping the spare cutting machine with one of the first cutting machine and the second cutting machine (operation **1302).** The process terminates thereafter.

The flowcharts and block diagrams in the different depicted examples illustrate the architecture, functionality, and operation of some possible implementations of apparatuses and methods in an illustrative example. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative example, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

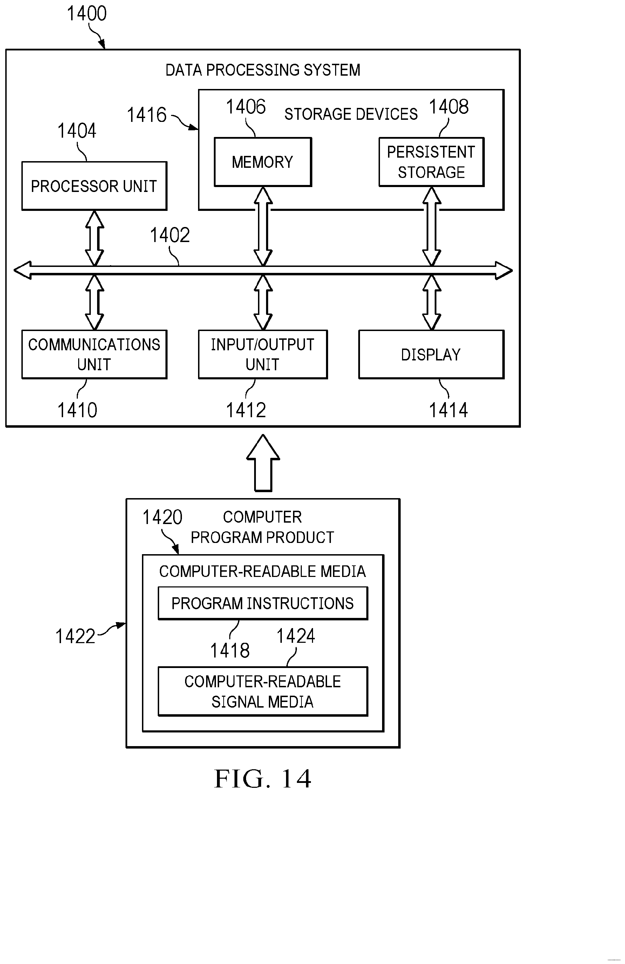

Turning now to **Figure 14****,** a block diagram of a data processing system is depicted in accordance with an illustrative example. Data processing system **1400** can be used to implement computer system **112** in **Figure 1****.** In this illustrative example, data processing system **1400** includes communications framework **1402,** which provides communications between processor unit **1404,** memory **1406,** persistent storage **1408,** communications unit **1410,** input/output (I/O) unit **1412,** and display **1414.** In this example, communications framework **1402** takes the form of a bus system.

Processor unit **1404** serves to execute instructions for software that can be loaded into memory **1406.** Processor unit **1404** includes one or more processors. For example, processor unit **1404** can be selected from at least one of a multicore processor, a central processing unit (CPU), a graphics processing unit (GPU), a physics processing unit (PPU), a digital signal processor (DSP), a network processor, or some other suitable type of processor. Further, processor unit **1404** can be implemented using one or more heterogeneous processor systems in which a main processor is present with secondary processors on a single chip. As another illustrative example, processor unit **1404** can be a symmetric multi-processor system containing multiple processors of the same type on a single chip.

Memory **1406** and persistent storage **1408** are examples of storage devices **1416.** A storage device is any piece of hardware that is capable of storing information, such as, for example, without limitation, at least one of data, program instructions in functional form, or other suitable information either on a temporary basis, a permanent basis, or both on a temporary basis and a permanent basis. Storage devices **1416** may also be referred to as computer readable storage devices in these illustrative examples. Memory **1406,** in these examples, can be, for example, a random-access memory or any other suitable volatile or non-volatile storage device. Persistent storage **1408** may take various forms, depending on the particular implementation.

For example, persistent storage **1408** may contain one or more components or devices. For example, persistent storage **1408** can be a hard drive, a solid-state drive (SSD), a flash memory, a rewritable optical disk, a rewritable magnetic tape, or some combination of the above. The media used by persistent storage **1408** also can be removable. For example, a removable hard drive can be used for persistent storage **1408.**

Communications unit **1410,** in these illustrative examples, provides for communications with other data processing systems or devices. In these illustrative examples, communications unit **1410** is a network interface card.

Input/output unit **1412** allows for input and output of data with other devices that can be connected to data processing system **1400.** For example, input/output unit **1412** may provide a connection for user input through at least one of a keyboard, a mouse, or some other suitable input device. Further, input/output unit **1412** may send output to a printer. Display **1414** provides a mechanism to display information to a user.

Instructions for at least one of the operating system, applications, or programs can be located in storage devices **1416,** which are in communication with processor unit **1404** through communications framework **1402.** The processes of the different examples can be performed by processor unit **1404** using computer-implemented instructions, which may be located in a memory, such as memory **1406.**

These instructions are referred to as program instructions, computer usable program instructions, or computer readable program instructions that can be read and executed by a processor in processor unit **1404.** The program instructions in the different examples can be embodied on different physical or computer readable storage media, such as memory **1406** or persistent storage 1408.

Program instructions **1418** are located in a functional form on computer readable media **1420** that is selectively removable and can be loaded onto or transferred to data processing system **1400** for execution by processor unit **1404.** Program instructions **1418** and computer readable media **1420** form computer program product **1422** in these illustrative examples. In the illustrative example, computer readable media **1420** is computer readable storage media **1424.**

Computer readable storage media **1424** is a physical or tangible storage device used to store program instructions **1418** rather than a medium that propagates or transmits program instructions **1418.** Computer readable storage media **1424** may be at least one of an electronic storage medium, a magnetic storage medium, an optical storage medium, an electromagnetic storage medium, a semiconductor storage medium, a mechanical storage medium, or other physical storage medium. Some known types of storage devices that include these mediums include: a diskette, a hard disk, a random access memory (RAM), a read-only memory (ROM), an erasable programmable read-only memory (EPROM or Flash memory), a static random access memory (SR_AM), a compact disc read-only memory (CD-ROM), a digital versatile disk (DVD), a memory stick, a floppy disk, a mechanically encoded device, such as punch cards or pits / lands formed in a major surface of a disc, or any suitable combination thereof.

Computer readable storage media **1424,** as that term is used in the present disclosure, is not to be construed as storage in the form of transitory signals per se, such as at least one of radio waves or other freely propagating electromagnetic waves, electromagnetic waves propagating through a waveguide, light pulses passing through a fiber optic cable, electrical signals communicated through a wire, or other transmission media.

Further, data can be moved at some occasional points in time during normal operations of a storage device. These normal operations include access, de-fragmentation, or garbage collection. However, these operations do not render the storage device as transitory because the data is not transitory while the data is stored in the storage device.

Alternatively, program instructions **1418** can be transferred to data processing system **1400** using a computer readable signal media. The computer readable signal media are signals and can be, for example, a propagated data signal containing program instructions **1418.** For example, the computer readable signal media can be at least one of an electromagnetic signal, an optical signal, or any other suitable type of signal. These signals can be transmitted over connections, such as wireless connections, optical fiber cable, coaxial cable, a wire, or any other suitable type of connection.

Further, as used herein, "computer readable media **1420"** can be singular or plural. For example, program instructions **1418** can be located in computer readable media **1420** in the form of a single storage device or system. In another example, program instructions **1418** can be located in computer readable media **1420** that is distributed in multiple data processing systems. In other words, some instructions in program instructions **1418** can be located in one data processing system while other instructions in program instructions **1418** can be located in one data processing system. For example, a portion of program instructions **1418** can be located in computer readable media **1420** in a server computer while another portion of program instructions **1418** can be located in computer readable media **1420** located in a set of client computers.

The different components illustrated for data processing system **1400** are not meant to provide architectural limitations to the manner in which different examples can be implemented. In some illustrative examples, one or more of the components may be incorporated in or otherwise form a portion of, another component. For example, memory **1406,** or portions thereof, may be incorporated in processor unit **1404** in some illustrative examples. The different illustrative examples can be implemented in a data processing system including components in addition to or in place of those illustrated for data processing system **1400.** Other components shown in **Figure 14** can be varied from the illustrative examples shown. The different examples can be implemented using any hardware device or system capable of running program instructions **1418.**

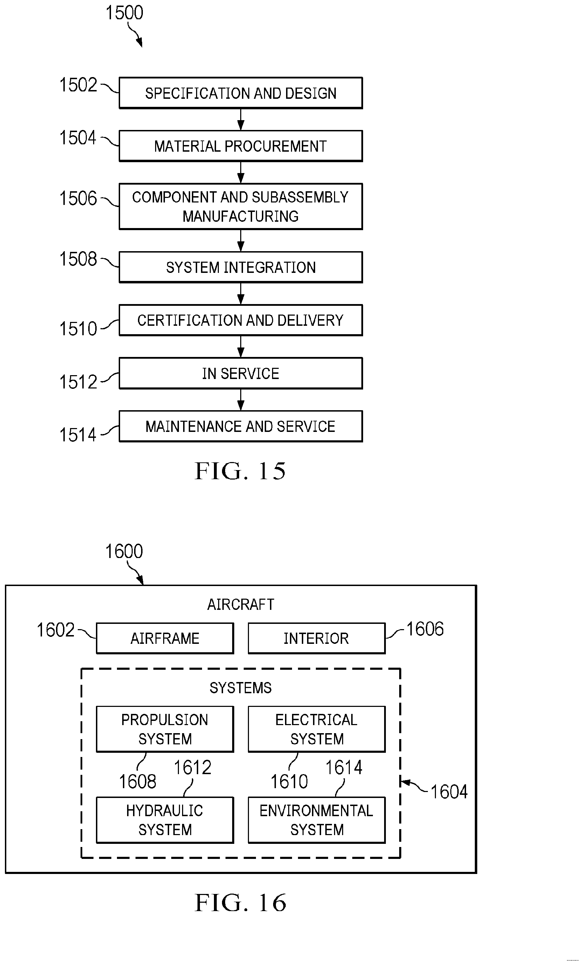

Illustrative examples of the disclosure may be described in the context of aircraft manufacturing and service method **1500** as shown in **Figure 15** and aircraft **1600** as shown in **Figure 16****.** Turning first to **Figure 15****,** an illustration of an aircraft manufacturing and service method is depicted in accordance with an illustrative example. During pre-production, aircraft manufacturing and service method **1500** may include specification and design **1502** of aircraft **1600** in **Figure 16** and material procurement **1504.**

During production, component and subassembly manufacturing **1506** and system integration **1508** of aircraft **1600** in **Figure 16** takes place. Thereafter, aircraft **1600** in **Figure 16** can go through certification and delivery **1510** in order to be placed in service **1512.** While in service **1512** by a customer, aircraft **1600** in **Figure 16** is scheduled for routine maintenance and service **1514,** which may include modification, reconfiguration, refurbishment, and other maintenance or service.

Each of the processes of aircraft manufacturing and service method **1500** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 16****,** an illustration of an aircraft is depicted in which an illustrative example may be implemented. In this example, aircraft **1600** is produced by aircraft manufacturing and service method **1500** in **Figure 15** and may include airframe **1602** with plurality of systems **1604** and interior **1606.** Examples of systems **1604** include one or more of propulsion system **1608,** electrical system **1610,** hydraulic system **1612,** and environmental system **1614.** Any number of other systems may be included. Although an aerospace example is shown, different illustrative examples may be applied to other industries, such as the automotive industry.

Apparatuses and methods embodied herein may be employed during at least one of the stages of aircraft manufacturing and service method **1500** in **Figure 15****.**

In one illustrative example, components or subassemblies produced in component and subassembly manufacturing **1506** in **Figure 15** can be fabricated or manufactured in a manner similar to components or subassemblies produced while aircraft **1600** is in service **1512** in **Figure 15****.** As yet another example, one or more apparatus examples, method examples, or a combination thereof can be utilized during production stages, such as component and subassembly manufacturing **1506** and system integration **1508** in **Figure 15****.** One or more apparatus examples, method examples, or a combination thereof may be utilized while aircraft **1600** is in service **1512,** during maintenance and service **1514** in **Figure 15****,** or both. The use of a number of the different illustrative examples may substantially expedite the assembly of aircraft **1600,** reduce the cost of aircraft **1600,** or both expedite the assembly of aircraft **1600** and reduce the cost of aircraft 1600.

In the illustrative example, the use of multi-ply lamination system **102** in **Figure 1** during at least one of component and subassembly manufacturing **1506** and maintenance and service **1514** can expedite the assembly and maintenance of aircraft **1600.** The manner in which courses are cut and placed by multi-ply lamination system **102** to form multi-ply laminates used in forming charges to manufacture composite parts reduces idle time of cutting systems and placement robots within multi-ply lamination system **102** and increases the throughput in placing courses to form plies.

Thus, one or more illustrative examples provide a method, apparatus, system, and computer program product for laying out courses to form plies.

One or more illustrative examples enable increased efficiency in placing courses to form a ply with increased efficiency and speed as compared to current techniques used to lay up courses for composite parts such as those that may be long and narrow. The illustrative examples avoid moving a lamination head many times during a layout process as with current techniques. Further, manual inspections are avoided through the use of cameras to generate images to analyze courses for anomalies that are out of tolerance.

In the illustrative example, simultaneous placement of multiple courses can be performed at the same time using placement robots. Further, swapping of the equipment can be performed to reduce downtime when material loading and other maintenance is needed. In the illustrative examples, a charge lamination process can be reduced from 12 hours to one hour for wing stringers.

The description of the different illustrative examples has been presented for purposes of illustration and description and is not intended to be exhaustive or limited to the examples in the form disclosed. The different illustrative examples describe components that perform actions or operations. In an illustrative example, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

The disclosure comprises examples in accordance with the following clauses:
Clause 1. A multi-ply lamination system (102, 200, 400) comprising:
   a first cutting system (120) and a second cutting system (122) each configured to independently cut materials (121) having fibers (123) oriented in an initial orientation (125) to form courses (131) and to move the courses (131) into staging positions (141);
   placement robots (124, 214, 420); and
   a controller (114) in communication with the first cutting system (120) and the second cutting system (122) and the placement robots (124, 214, 420), wherein the controller (114) is configured to:
      control the first cutting system (120) to cut and move a first group of courses (131) into the staging positions (141);
      control the placement robots (124, 214, 420) to pick up and place the first group of courses (131) from the staging positions (141) to a layup surface (127, 234, 320, 416) to form a first ply (130) of a multi-ply laminate (128), changing an orientation of the fibers (123) from the initial orientation (125) to a desired orientation (146) for the first ply (130);
      control the second cutting system (122) to cut and move a second group of courses (131) into the staging positions (141) while the placement robots (124, 214, 420) are picking up and placing the first group of courses (131); and
      control the placement robots (124, 214, 420) to pick up and place the second group of courses (131) from the staging positions (141) to the layup surface (127, 234, 320, 416) to form a second ply (134) of the multi-ply laminate (128), after the first ply (130) has been formed, changing the orientation of the fibers (123) from the initial orientation (125) to the desired orientation (146) for the second ply (134).
Clause 2. The multi-ply lamination system (102, 200, 400) of Clause 1, further comprising:
   an automated tape layup machine (126) positioned to place a material (145) having fibers (148) in the initial orientation (125) onto the layup surface (127, 234, 320, 416), wherein the controller (114) is configured to control the automated tape layup machine (126) to place the material to form a third ply (136) of the multi-ply laminate (128) with the third ply (136) having the fibers (148) oriented in the initial orientation (125).
Clause 3. The multi-ply lamination system (102, 200, 400) of Clause 1 or 2,
   wherein the first cutting system (120) comprises:
      a first cutting machine (132, 202, 132) that is configured to cut the courses (131); and
      a first conveyor (133, 204, 302, 412) that is configured to move the courses (131) cut by the first cutting machine (132, 202, 132) to the staging positions (141) with the initial orientation (125); and
   wherein the second cutting system (122) comprises:
      a second cutting machine (122, 207, 413) that is configured to cut the courses (131); and
      a second conveyor (139, 208, 304, 414) that is configured to move the courses (131) cut by the second cutting machine (122, 207, 413) to the staging positions (141) with the initial orientation (125).
Clause 4. The multi-ply lamination system (102, 200, 400) of Clause 3, wherein at least one of the first and the second cutting machine (122, 207, 413) is configured to cut the courses (131) from a roll of a material.
Clause 5. The multi-ply lamination system (102, 200, 400) of any of Clauses 1-4, further comprising a layup conveyor, wherein the layup surface (127, 234, 320, 416) is on the layup conveyor.
Clause 6. The multi-ply lamination system (102, 200, 400) of any of Clauses 1-5, further comprising a layup table, wherein the layup surface (127, 234, 320, 416) is on the layup table.
Clause 7. The multi-ply lamination system (102, 200, 400) of any of Clauses 1-6, further comprising an inspection system (149) configured to determine whether any of the courses (131) have anomalies (155) that are out of tolerance.
Clause 8. The multi-ply lamination system (102, 200, 400) of Clause 7, wherein the inspection system (149) comprises robot cameras (152) connected to the placement robots (124, 214, 420);
   wherein the robot cameras (152) are positioned to generate top images (153) of a top surface of the courses (131); and
   wherein the controller (114) is configured to:
   generate the top images (153) of the top surface of the courses (131) in response the placement robots (124, 214, 420) moving to pick up the courses (131) ;
   analyze the top images (153) for the anomalies (155) that are out of tolerance; and
   control the placement robots (124, 214, 420) to move any of the courses (131) having the anomalies (155) that are out of tolerance to a scrap location (154).
Clause 9. The multi-ply lamination system (102, 200, 400) of Clause 7 or 8, wherein the inspection system (149) comprises upward cameras (160) connected to camera stations;
   wherein the upward cameras (160) are positioned to generate bottom images (162) of a bottom surface of the courses (131) held by the placement robots (124, 214, 420); and
   wherein the controller (114) is configured to:
      generate the bottom images (162) of the bottom surface of the courses (131);
      analyze the bottom images (162) for the anomalies (155) that are out of tolerance; and
      control the placement robots (124, 214, 420) to move any of the courses (131) having the anomalies (155) that are out of tolerance to a scrap location (154).
Clause 10. The multi-ply lamination system (102, 200, 400) of any of Clauses 7-9,
   wherein the inspection system (149) comprises a cutting camera system (170),
   wherein the cutting camera system (170) is positioned to generate top images (153) of a top surface of the courses (131) cut by the first cutting system (120) and the second cutting system (122), and
   wherein the controller (114) is configured to:
      generate the top images (153) of the courses (131) in response to the first cutting system (120) and the second cutting system (122) cutting the courses (131);
      analyze the top images (153) for the anomalies (155) that are out of tolerance; and
      control the placement robots (124, 214, 420) to move any of the courses (131) having the anomalies (155) that are out of tolerance to a scrap location (154).
Clause 11. The multi-ply lamination system (102, 200, 400) of Clause 10 further comprising:
   a number of scrap robots (180) positioned to remove the courses (131) cut by the first cutting system (120) and the second cutting system (122) with the anomalies (155) that are out of the tolerance to the scrap location (154).
Clause 12. The multi-ply lamination system (102, 200, 400) of any of Clauses 7-11, wherein the inspection system (149) comprises at least one of a camera system, a thermal camera, an infrared light camera, a visible light camera, a laser scanner, an x-ray imaging machine, and a laser shearography system.
Clause 13. The multi-ply lamination system (102, 200, 400) of any of Clauses 1-12, further comprising:
   a spare cutting machine (132, 409);
   and wherein the controller (114) is configured to synchronize operation of the spare cutting machine (132, 409) to cut the courses (131) in response to swapping the spare cutting machine (132, 409) with a cutting machine in one of the first cutting system (120) and the second cutting system (122).
Clause 14. The multi-ply lamination system (102, 200, 400) of any of Clauses 1-13, wherein desired orientations for the courses (131) are selected from a group consisting of 15 degrees, 30 degrees, 45 degrees, 60 degrees, 75 degrees, and 90 degrees relative to the initial orientation (125).
Clause 15. The multi-ply lamination system (102, 200, 400) of Clause 14, wherein a desired orientation (146) for a first ply (130) is different from the desired orientation (146) for a second ply (134).
Clause 16. The multi-ply lamination system (102, 200, 400) of any of Clauses 1-15, wherein the multi-ply laminate (128) is used in a charge that is used to form a part selected from a group comprising an elongate composite part, a wing stringer, a fuselage stringer, an empennage a stringer, floor beam, a wing spar, and an empennage spar.
Clause 17. The multi-ply lamination system (102, 200, 400) of any of Clauses 1-16,
   wherein the placement robots (124, 214, 420) are configured to change the orientation of the fibers (123) in at least one of the courses (131) by re-orienting a course as it is picked up from a staging position and placed on the layup surface (127, 234, 320, 416) to form a ply;
   wherein the ply has a width defined by exterior edges of the ply; and
   wherein the course is re-oriented so that one or more cut edges of the course forms a part of an exterior edge of the ply when placed on the layup surface (127, 234, 320, 416).
Clause 18. A multi-ply lamination system (102, 200, 400) comprising:
   a first cutting system (120) and a second cutting system (122) each configured to independently cut materials (121) having fibers (123) oriented in an initial orientation (125) form courses (131) and move those courses (131) into staging positions (141);
   placement robots (124, 214, 420);
   an automated tape layup machine (126) positioned to place a material (145) having fibers (148) in the initial orientation (125) onto the layup surface (127, 234, 320, 416); and
   a controller (114) in communication with the first cutting system (120), the second cutting system (122), the placement robots (124, 214, 420), and the automated tape layup machine (126), wherein the controller (114) is configured to:
      control the first cutting system (120) to cut and move a first group of courses (131) into the staging positions (141);
      control the placement robots (124, 214, 420) to pick up and place the first group of courses (131) from the staging positions (141) to a layup surface (127, 234, 320, 416) to form a first ply (130) of a multi-ply laminate (128), changing an orientation of the fibers (123) from the initial orientation (125) to a desired orientation (146) for the first ply (130);
      control the second cutting system (122) to cut and move a second group of courses (131) into the staging positions (141) while the placement robots (124, 214, 420) are picking up and placing the first group of courses (131);
      control the placement robots (124, 214, 420) to pick up and place the second group of courses (131) from the staging positions (141) to the layup surface (127, 234, 320, 416) to form a second ply (134) of the multi-ply laminate (128), after the first ply (130) has been formed, changing the orientation of the fibers (123) from the initial orientation (125) to the desired orientation (146) for the second ply (134); and
      control the automated tape layup machine (126) to place the material (145) to form a ply of the multi-ply laminate (128), with the ply having the fibers (148) oriented in the initial orientation (125).
Clause 19. A method of forming a multi-ply laminate (128), the method comprising:
   controlling (800) a first cutting system (120) to cut and move a first group of courses (131) into staging positions (141);
   controlling (802) placement robots (124, 214, 420) to pick up and place the first group of courses (131) from the staging positions (141) to a layup surface (127, 234, 320, 416) to form a first ply (130) of the multi-ply laminate (128), changing an orientation of fibers (123) from an initial orientation (125) to a desired orientation (146) for the first ply (130);
   controlling (804) a second cutting system (122) to cut and move a second group of courses (131) into the staging positions (141) while the placement robots (124, 214, 420) are picking up and placing the first group of courses (131);
   controlling (806) the placement robots (124, 214, 420) to pick up and place the second group of courses (131) from the staging positions (141) to the layup surface (127, 234, 320, 416) to form a second ply (134) of the multi-ply laminate (128) after the first ply (130) has been formed, changing the orientation of the fibers (123) from the initial orientation (125) to the desired orientation (146) for the second ply (134); and
   controlling (900) an automated tape layup machine (126) to place a material (145) to form a third ply (136) of the multi-ply laminate (128) with the third ply having the fibers (123) oriented in the initial orientation (125) .
Clause 20. The method of Clause 19, wherein each subsequent ply is formed by placing at least some of the material of each subsequent ply to at least partially overlap a prior ply.
Clause 21. The method of Clause 19 or 20,
   wherein the orientation of the fibers (123) in at least one of the courses (131) is changed by re-orienting the course as it is picked up from a staging position and placed on the layup surface (127, 234, 320, 416) to form a ply;
   wherein the ply has a width defined by exterior edges of the ply; and
   wherein the course is re-oriented so that one or more cut edges of the course forms a part of an exterior edge of the ply when placed on the layup surface (127, 234, 320, 416).
Clause 22. The method of any of Clauses 19-21, further comprising:
   generating (1000) top images (153) of a top surface of the courses (131) using robot cameras (152) connected to the placement robots (124, 214, 420) in response the placement robots (124, 214, 420) moving to pick up the courses (131);
   analyzing (1002) the top images (153) for anomalies (155) that are out of a tolerance; and
   controlling (1004) the placement robots (124, 214, 420) to move any of the courses (131) having the anomalies (155) that are out of the tolerance to scrap location (154).
Clause 23. The method of any of Clauses 19-22, further comprising:
   generating (1100) bottom images (162) of a bottom surface of the courses (131) using held by the placement robots (124, 214, 420) using upward cameras (160) connected to camera stations;
   analyzing (1102) the bottom images (162) for anomalies (155) that are out of a tolerance; and
   controlling (1104) the placement robots (124, 214, 420) to move any of the courses (131) having the anomalies (155) that are out of tolerance to a scrap location (154).
Clause 24. The method of any of Clauses 19-23, further comprising:
   generating (1200) top images (153) of the courses (131) using a cutting camera system (170) in response to the first cutting system (120) and the second cutting system (122) cutting the courses (131);
   analyzing (1202) the top images (153) for anomalies (155) that are out of a tolerance; and
   controlling (1204) robots to move any of the courses (131) having the anomalies (155) that are out of tolerance to a scrap location (154).
Clause 25. The method of any of Clauses 19-24, further comprising:
   replacing (1300) a cutting machine in one of a first cutting machine (132, 202, 132) in the first cutting system (120) and a second cutting machine (122, 207, 413) in the second cutting system (122) with a spare cutting machine (132, 409) in response to one of the first cutting machine (132, 202, 132) and the second cutting machine (122, 207, 413) needing maintenance; and
   synchronizing (1302) operation of the spare cutting machine (132, 409) to cut the courses (131) in response to swapping the spare cutting machine (132, 409) with one of and first cutting machine (132, 202, 132) and the second cutting machine (122, 207, 413).

Many modifications and variations will be apparent to those of ordinary skill in the art. Further, different illustrative examples may provide different features as compared to other desirable examples. The example or examples selected are chosen and described in order to best explain the principles of the examples, the practical application, and to enable others of ordinary skill in the art to understand the disclosure for various examples with various modifications as are suited to the particular use contemplated.

## Claims

1. A multi-ply lamination system (102, 200, 400) comprising:
a first cutting system (120) and a second cutting system (122) each configured to independently cut materials (121) having fibers (123) oriented in an initial orientation (125) to form courses (131) and to move the courses (131) into staging positions (141);
placement robots (124, 214, 420); and
a controller (114) in communication with the first cutting system (120) and the second cutting system (122) and the placement robots (124, 214, 420), wherein the controller (114) is configured to:
control the first cutting system (120) to cut and move a first group of courses (131) into the staging positions (141);
control the placement robots (124, 214, 420) to pick up and place the first group of courses (131) from the staging positions (141) to a layup surface (127, 234, 320, 416) to form a first ply (130) of a multi-ply laminate (128), changing an orientation of the fibers (123) from the initial orientation (125) to a desired orientation (146) for the first ply (130);
control the second cutting system (122) to cut and move a second group of courses (131) into the staging positions (141) while the placement robots (124, 214, 420) are picking up and placing the first group of courses (131); and
control the placement robots (124, 214, 420) to pick up and place the second group of courses (131) from the staging positions (141) to the layup surface (127, 234, 320, 416) to form a second ply (134) of the multi-ply laminate (128), after the first ply (130) has been formed, changing the orientation of the fibers (123) from the initial orientation (125) to the desired orientation (146) for the second ply (134).

2. The multi-ply lamination system (102, 200, 400) of claim 1 further comprising:
an automated tape layup machine (126) positioned to place a material (145) having fibers (148) in the initial orientation (125) onto the layup surface (127, 234, 320, 416), wherein the controller (114) is configured to control the automated tape layup machine (126) to place the material to form a third ply (136) of the multi-ply laminate (128) with the third ply (136) having the fibers (148) oriented in the initial orientation (125).

3. The multi-ply lamination system (102, 200, 400) of claim 1 or 2,
wherein the first cutting system (120) comprises:
a first cutting machine (132, 202, 132) that is configured to cut the courses (131); and
a first conveyor (133, 204, 302, 412) that is configured to move the courses (131) cut by the first cutting machine (132, 202, 132) to the staging positions (141) with the initial orientation (125), and
wherein the second cutting system (122) comprises:
a second cutting machine (122, 207, 413) that is configured to cut the courses (131); and
a second conveyor (139, 208, 304, 414) that is configured to move the courses (131) cut by the second cutting machine (122, 207, 413) to the staging positions (141) with the initial orientation (125).

4. The multi-ply lamination system (102, 200, 400) of any of claims 1-3, further comprising an inspection system (149) configured to determine whether any of the courses (131) have anomalies (155) that are out of tolerance.

5. The multi-ply lamination system (102, 200, 400) of claim 4, wherein the inspection system (149) comprises at least one of a camera system, a thermal camera, an infrared light camera, a visible light camera, a laser scanner, an x-ray imaging machine, and a laser shearography system.

6. The multi-ply lamination system (102, 200, 400) of any of claims 1-5, further comprising:
a spare cutting machine (132, 409);
and wherein the controller (114) is configured to synchronize operation of the spare cutting machine (132, 409) to cut the courses (131) in response to swapping the spare cutting machine (132, 409) with a cutting machine in one of the first cutting system (120) and the second cutting system (122).

7. The multi-ply lamination system (102, 200, 400) of any of claims 1-6, wherein desired orientations for the courses (131) are selected from a group consisting of 15 degrees, 30 degrees, 45 degrees, 60 degrees, 75 degrees, and 90 degrees relative to the initial orientation (125).

8. The multi-ply lamination system (102, 200, 400) of claim 7, wherein a desired orientation (146) for a first ply (130) is different from the desired orientation (146) for a second ply (134).

9. The multi-ply lamination system (102, 200, 400) of any of claims 1-8, wherein the multi-ply laminate (128) is used in a charge that is used to form a part selected from a group comprising an elongate composite part, a wing stringer, a fuselage stringer, an empennage a stringer, floor beam, a wing spar, and an empennage spar.

10. The multi-ply lamination system (102, 200, 400) of any of claims 1-9,
wherein the placement robots (124, 214, 420) are configured to change the orientation of the fibers (123) in at least one of the courses (131) by re-orienting a course as it is picked up from a staging position and placed on the layup surface (127, 234, 320, 416) to form a ply;
wherein the ply has a width defined by exterior edges of the ply; and
wherein the course is re-oriented so that one or more cut edges of the course forms a part of an exterior edge of the ply when placed on the layup surface (127, 234, 320, 416).

11. The multi-ply lamination system (102, 200, 400) of claim 1, further comprising:
an automated tape layup machine (126) positioned to place a material (145) having fibers (148) in the initial orientation (125) onto the layup surface (127, 234, 320, 416); and wherein the controller is further configured to:
control the automated tape layup machine (126) to place the material (145) to form a ply of the multi-ply laminate (128), with the ply having the fibers (148) oriented in the initial orientation (125).

12. A method of forming a multi-ply laminate (128), the method comprising:
controlling (800) a first cutting system (120) to cut and move a first group of courses (131) into staging positions (141);
controlling (802) placement robots (124, 214, 420) to pick up and place the first group of courses (131) from the staging positions (141) to a layup surface (127, 234, 320, 416) to form a first ply (130) of the multi-ply laminate (128), changing an orientation of fibers (123) from an initial orientation (125) to a desired orientation (146) for the first ply (130);
controlling (804) a second cutting system (122) to cut and move a second group of courses (131) into the staging positions (141) while the placement robots (124, 214, 420) are picking up and placing the first group of courses (131);
controlling (806) the placement robots (124, 214, 420) to pick up and place the second group of courses (131) from the staging positions (141) to the layup surface (127, 234, 320, 416) to form a second ply (134) of the multi-ply laminate (128) after the first ply (130) has been formed, changing the orientation of the fibers (123) from the initial orientation (125) to the desired orientation (146) for the second ply (134); and
controlling (900) an automated tape layup machine (126) to place a material (145) to form a third ply (136) of the multi-ply laminate (128) with the third ply having the fibers (123) oriented in the initial orientation (125) .

13. The method of claim 12,
wherein the orientation of the fibers (123) in at least one of the courses (131) is changed by re-orienting the course as it is picked up from a staging position and placed on the layup surface (127, 234, 320, 416) to form a ply;
wherein the ply has a width defined by exterior edges of the ply; and
wherein the course is re-oriented so that one or more cut edges of the course forms a part of an exterior edge of the ply when placed on the layup surface (127, 234, 320, 416).

14. The method of claim 12 or 13, further comprising:
generating (1000) top images (153) of a top surface of the courses (131) and/or bottom images (162) of a bottom surface of the courses (131) using robot cameras (152) connected to the placement robots (124, 214, 420) and/or upward cameras (160) connected to camera stations in response the placement robots (124, 214, 420) moving to pick up the courses (131);
analyzing (1002) the top images (153) and/or bottom images (162) for anomalies (155) that are out of a tolerance; and
controlling (1004) the placement robots (124, 214, 420) to move any of the courses (131) having the anomalies (155) that are out of the tolerance to scrap location (154).

15. The method of any of claims 12-14, further comprising:
replacing (1300) a cutting machine in one of a first cutting machine (132, 202, 132) in the first cutting system (120) and a second cutting machine (122, 207, 413) in the second cutting system (122) with a spare cutting machine (132, 409) in response to one of the first cutting machine (132, 202, 132) and the second cutting machine (122, 207, 413) needing maintenance; and
synchronizing (1302) operation of the spare cutting machine (132, 409) to cut the courses (131) in response to swapping the spare cutting machine (132, 409) with one of and first cutting machine (132, 202, 132) and the second cutting machine (122, 207, 413).
